# EUROPEAN PATENT SPECIFICATION

(11) **EP 4 042 865 B1**
(45) Date of publication and mention of the grant of the patent: **01.11.2023**
(21) Application number: 22154019.8
(22) Date of filing: 28.01.2022
(51) Int. Cl.: A01M 1/22, A01M 1/24, A01M 29/34, A01M 29/24

(54) **ANTI-INSECT BARRIER AND METHOD FOR CONTROLLING INSECTS**
INSEKTENSCHUTZBARRIERE UND VERFAHREN ZUR BEKÄMPFUNG VON INSEKTEN
BARRIÈRE ANTI-INSECTES ET PROCÉDÉ DE LUTTE CONTRE LES INSECTES

(30) Priority: 12.02.2021 NL 2027550
(43) Date of publication of application: 17.08.2022
(73) Proprietor: Einde Processierups B.V., 7325 WH Apeldoorn (NL)
(72) Inventor: VERNHOUT, Peter Paul, 7325 WH Apeldoorn (NL); VERNHOUT, Daniel, 7325 WH Apeldoorn (NL); MÜLLER, Kasper Henri, 7325 WH Apeldoorn (NL)
(74) Representative: Peters, Sebastian Martinus

(56) References cited:
- AU-A- 4 574 796
- DE-B1- 2 739 165
- US-A- 4 471 561
- US-A1- 2013 008 078

## Description

### BACKGROUND

The invention relates to an anti-insect barrier and a method for protecting an element, in particular a structure or a trunk or branch of a tree or shrub, through the use of electricity. In particular, the invention relates to an anti-insect belt and method for protecting a tree or plant from the oak processionary caterpillar.

Some species of insects are considered to be harmful for a variety of reasons, for example for the damage caused by the insect to plants or trees or for spreading disease among said plants or trees. In some cases, the insects themselves are considered an annoyance or are even harmful to humans. An example of such a harmful insect is the oak processionary caterpillar.

Methods for the control and management of such insects include the spraying of the tree affected by the caterpillars by insecticides. However, the use of insecticides may have serious side effects such as simultaneously killing beneficial insects such as bees, or other wild life such as birds. Additionally, a prolonged use of such pesticides may lead to the development of immunity of the target insects to the used pesticide.

A different method to protect the tree from caterpillars is the application of a glue band coated with a sticky material around a tree trunk, in order to capture and/or kill caterpillars that move along the tree trunk. A drawback of this method however is that the sticky material may lose effectiveness over time, for example by being covered with debris or dead insects, which allows other caterpillars to climb over said debris or dead insects.

An alternative solution is described in US 4471561A, wherein insects are killed by electric means through electrocution. US 4471561A describes an insect exterminator having a base sheet of an electrically insulating material, which is placed around the trunk of a tree, such that it completely encircles said trunk. The base sheet further contains two electrical contacts, which are spaced apart and extend along the entire length of the base sheet. The two electrical contacts are each connected to a source of electrical power and are at least partially exposed. When a caterpillar bridges the two electrical contacts, by attempting to crawl over the sheet, the caterpillar closes an electrical circuit between said two electrical contacts. As a result, an electrical current passes through the caterpillar, killing said caterpillar.

### SUMMARY OF THE INVENTION

A disadvantage of the known anti-insect barriers is that they proved to be inadequate for stopping large numbers of insects which attempt to cross said barrier substantially at the same time or in procession, in particular for stopping oak processionary caterpillars, that travel as a group or procession comprising a multitude of individual insects.

It is an object of the present invention to provide an alternative anti-insect barrier and method for protecting the element against insects, which is easy to install and/or that is also suitable for stopping insects that travel along the element as a group or procession comprising a multitude of individual insects along the element, such as the oak processionary caterpillar.

According to a first aspect, the invention provides an anti-insect barrier for protecting an element, in particular a structure or a trunk or branch of a tree or shrub, such as a tree or a pillar, wherein the barrier comprises:
a power supply,
a control system,
an elongated strip made of an electrically insulating material, wherein the strip comprises a first surface configured to be placed against an outer surface of the element, and a second surface on a side of the strip opposite to the first surface,
a first electrical conductor and a second electrical conductor, wherein said first electrical conductor and said second electrical conductor arranged on the second surface of the strip, are spaced apart and extending along a longitudinal direction of said strip, wherein a distance between the first and second electrical conductor is configured so that an insect that attempts to traverse said anti-insect barrier interconnects the first and second electrical conductor, and wherein the first electrical conductor and the second electrical conductor are each connected to the power supply via the control system,
wherein the control system is configured for temporarily applying a voltage difference between the first and the second electrical conductor, and
wherein the first electrical conductor and the second electrical conductor at least partially comprise elastic conductors.

When the elongated electrical conductors at least partially comprise an elastic conductor and when the at least partially elastic electrical conductors are arranged on the elongated strip, the elastic conductor allows to arrange the elongated strip against an outer surface of the element with some tension and thereby holding the anti-insect barrier snugly against the outer surface of the element. Furthermore, when the anti-insect barrier is arranged around the element, due to the tension of the elastic conductors, the anti-insect barrier may be held in position without the use of adhesives or mechanical fasteners, such as nails or screws. Accordingly, the lack of a need for adhesives or mechanical fasteners allows to easily install the anti-insect barrier of the present invention and may also improve the reusability of the anti-insect barrier.

In an embodiment, the elastic conductors are formed as a spring, preferentially a helical or coil spring. Preferably, the elastic conductors provide the elongated electrical conductors with an elasticity at least in a longitudinal direction of the electrical conductors. In an embodiment, the elongated electrical conductors are elastic over substantially their complete length. In an alternative embodiment, the elongated electrical conductors comprise a substantially inelastic part and an elastic part, wherein the inelastic and elastic parts are arranged in series in the longitudinal direction of the electrical conductors.

In an embodiment, said voltage difference between the first and the second electrical conductor exceeds 5 kV, at least when substantially no current flows between the first and second electrical conductor. By applying a high voltage difference, one that exceeds 5 kV, the anti-insect barrier is able to electrocute insects that move over the element as group or a procession of insects, as the voltage difference is high enough to allow electricity to pass between the electrical conductors through multiple insects.

It is noted, that in case a large number of insects are electrocuted at the same time, the voltage difference between the first and second electrical conductor may drop below the 5 kV due to the large electrical load on the system.

Additionally, as the anti-insect barrier is configured to be placed against the outer surface of the element, the anti-insect barrier ensures that insects cannot crawl or move in between the anti-insect barrier and the element, and are instead forced to pass over the electrical conductors and can thus be electrocuted.

In an embodiment, the voltage difference exceeds 10 kV, preferably exceeds 15 kV and most preferably is arranged between 15 to 20 kV. An advantage of the application of such high voltage differences is that increasingly larger groups or processions of insects can be electrocuted.

In order to prevent that the high voltage difference is continuously present on the first and second electrical conductors, the anti-insect barrier according to the invention is configured to temporarily providing the high voltage difference over the first and second electrical conductor. In an embodiment, the anti-insect barrier comprises a detection system, wherein the detection system is configured to send a signal to the control system, wherein said signal is indicative of the presence of at least one insect on the anti-insect barrier, and wherein the control system is configured to apply the voltage difference in response to receiving said signal. Accordingly, the anti-insect barrier of this embodiment or this invention is configured to apply the voltage difference over the electrical conductors when the presence of an insect on the anti-insect barrier is detected.

It is noted that the detection system may also be used in an anti-insect barrier without elastic conductors. Accordingly, invention also provides an anti-insect barrier for protecting an element, in particular a structure or a trunk or branch of a tree or shrub, such as a tree or a pillar, wherein the barrier comprises:
a power supply,
a control system,
an elongated strip made of an electrically insulating material, wherein the strip comprises a first surface configured to be placed against an outer surface of the element, and a second surface on a side of the strip opposite to the first surface,
a first electrical conductor and a second electrical conductor, wherein said first electrical conductor and said second electrical conductor arranged on the second surface of the strip, are spaced apart and extending along a longitudinal direction of said strip, wherein a distance between the first and second electrical conductor is configured so that an insect that attempts to traverse said anti-insect barrier interconnects the first and second electrical conductor, and wherein the first electrical conductor and the second electrical conductor are each connected to the power supply via the control system,
wherein the control system is configured for temporarily applying a voltage difference between the first and the second electrical conductor, and
wherein, the anti-insect barrier comprises a detection system, wherein the detection system is configured to send a signal to the control system, wherein said signal is indicative of the presence of at least one insect on the anti-insect barrier, and wherein the control system is configured to apply the voltage difference in response to receiving said signal.

Preferably, the detection system is configured to distinguish between different kinds of animals, in particular to identify a characteristic of a target insect species. The anti-insect barrier of this embodiment only applies the voltage difference of 5 kV or more, when the detection system has detected the presence of at least one insect and has identified that said insect has a characteristic of the target insect species. Accordingly, the anti-insect barrier of this embodiment is a species-specific barrier and thereby an unintended electrocution of other animals, in particular other insects, or humans can be reduced or even circumvented.

In an embodiment, the detection system is configured to measure changes in an electrical capacitance and/or electrical resistance between any two of: the first electrical conductor, the second electrical conductor, a third electrical conductor, and one or more sensor wires, if present. The inventors found that the electrical capacitance and/or the electrical resistance as measured between two conductors, and/or the way that these electrical properties change in time, can provide a characteristic measurement, which allows to distinguish between different kinds of animals.

It is noted that, in use, the electrical capacitance and/or electrical resistance is preferably measured between any of: the first electrical conductor, the second electrical conductor, a third electrical conductor, and one or more sensor wires. Accordingly, in an embodiment, the anti-insect barrier may in addition comprise a third electrical conductor and/or one or more sensor wires, as described in more detail below.

In an embodiment, the detection system is configured for measuring a time period between
detecting a first electrical change between the first electrical conductor and the third conductor or between the first electrical conductor and a first one of the sensor wires, and
detecting a second electrical change between the second electrical conductor and the third conductor or between the second electrical conductor and a second one of the sensor wires which is different from the first one of the sensor wires.

Preferably, the first electrical change is substantially equal to the second electrical change.

The inventors found that the time period between the first and second electrical change can be used to distinguish between different kinds of animals, in particular to identify a characteristic of a target insect species. The anti-insect barrier of this embodiment only applies the voltage difference of 5 kV or more, when the detection system has detected the presence of at least one insect and has identified that said insect has a characteristic of the target insect species.

In an embodiment, wherein the anti-insect barrier further comprises said one or more sensor wires, the one or more sensor wires are configured to be placed against the outer surface of the element, wherein the one or more sensor wires are arranged spaced apart from the elongated strip. In an embodiment said one or more sensor wires are spaced apart from the elongated strip by a distance of approximately 10 cm. The addition of one or more sensor wires spaced apart from the elongated strip allows to detect whether or not a detected animal or insect is larger or travels in a group that is larger than the spacing between the first and second electrical conductors. This added benefit is particularly relevant in case of insects, such as the oak processionary caterpillars, which are known to travel in large groups.

In an embodiment, the anti-insect barrier comprises two sensor wires placed at opposing sides of the elongated strip. Accordingly, the anti-insect barrier according to this embodiment allows to detect in which direction the insect or group of insects is traveling over said barrier, by monitoring which one of the two sensor wires is involved in the detection of the insect or group of insects.

In an embodiment, wherein the anti-insect barrier comprises a third electrical conductor, said third electrical conductor is spaced apart from the first electrical conductor and from the second electrical conductor, and wherein the third electrical conductor is connected to the control system and arranged on the second surface of the elongated strip. An advantage of the third electrical conductor, is that the anti-insect barrier has an increased effectiveness with regards to the electrocution of insects that travel in both directions across the elongated strip. Preferably, the anti-insect barrier is configured so that the electrical conductor in the center acts as a live wire, while the two outer electrical conductors act as a neutral or ground wire. In that case, when the insect crosses the elongated strip, the insects do not 'feel' any electrical current when they move over the outer electrical conductor. Only when the insects continue to move over the strip and proceed to contact the center conductor they bridge the space between the center conductor and one of the outer conductors, and subsequently can be electrocuted.

In contrast, when the insect barrier is configured so that the two outer electrical conductors act as a live wire, while the electrical conductor in the center acts as a neutral or ground wire, the insects may sense an electrical current on the first electrical contact that they touch, and this may encourage the insect to find an alternative route or turn around, and the insect may not cross the conductors.

Furthermore, as a result of the third electrical conductor, the anti-insect barrier can detect in which direction the insect is traveling over the belt. Accordingly, the anti-insect barrier according to this embodiment can be used to monitor and capture the behavior of the animals which travel over the barrier, and to collect data which characterizes this behavior. This data can be used for scientific research and for fine-tuning the detection system and the barrier itself, for example by changing the operating of the detection system and/or the anti-insect barrier at different times of the day. This added benefit is especially relevant, in the case of insects, such as oak processionary caterpillars, which are known to the travel between their nests and leaves on a tree repeatedly within a day. For example, by moving upwards from the nest to feed in the night, and back downwards towards the nest in the morning. As a result, the oak processionary caterpillars may traverse the anti-insect barrier multiple times a day and from multiple directions, providing a multitude of opportunities to electrocute said insects.

In an embodiment, the detection system is part of the control system. This provides a very compact system.

Although the anti-insect barrier of the present invention may also be applied to a wall of a building, for example, it is particularly intended for protecting a element such as a tree or a pillar. Accordingly, in an embodiment, the elongated strip, the first electrical conductor and the second electrical conductor are configured to encircle the element. By encircling the element, said element can be fully protected from insects that travel along said element. In other words, no alternative routes along said element exist for the insect and thus the insect has to pass over to elongated strip. Furthermore, by encircling the element the anti-insect barrier is more conveniently applied and/or fixed to the element.

In an embodiment, the elongated strip comprises longitudinal edges at opposite longitudinal sides of the elongated strip, wherein at each longitudinal edge the second surface meets the first surface at an acute angle. As a result, the elongated strip presents a smooth and sloped surface relative to the outer surface of the element, which ensures that the strip allows insects to easily move onto the strip and travel across said strip and thus the electrical conductors.

In an embodiment, the elongated strip comprises at least two longitudinal grooves, wherein said longitudinal grooves are spaced apart and extending along a longitudinal direction of said strip, wherein said longitudinal grooves are configured for receiving the first and second electrical conductor. The grooves allow to position and hold the electrical conductors at a desired distance spaced apart. This is in particular advantageous for an anti-insect barrier which can be assembled and disassembled and which allows to position and remove the electrical conductors from the anti-insect barrier.

In an embodiment, a depth of said longitudinal grooves is equal or less than a diameter of said first and second electrical conductors. Accordingly, the electrical conductors can be arranged inside said grooves such that a surface of the electrical conductor is substantially flush with the surface of the elongated strip, or such that said surface of the electrical conductor is arranged above the surface of the elongated strip. This allows that insect which crawl over the strip can easily contact the electrical conductors.

In an embodiment, the control system comprises a communication-unit configured for receiving and/or sending data. This allows the control system to, for example, report a log of the instances wherein the anti-insect barrier applied a high voltage difference across the electrical conductors. Especially when this data is combined with data that corresponds to the measured electrical characteristics at the time the voltage difference was applied, the data can used to provide updates to the control system in order to improve the selectivity of the control system towards a target insect species in the future.

In an embodiment, the anti-insect barrier further comprises a solar cell, wherein the solar cell is electrically connected to said power supply. The addition of a solar cell allows the anti-insect barrier to function, or to function for longer periods of time from a battery, or to function without being connected to the power grid. This is especially useful in cases wherein the anti-insect barrier is applied to a element which is in a remote place. Furthermore, especially in the case of the oak processionary caterpillar, changing for example a battery of the power supply may require the intervention of a trained and specially protected technician.

In an embodiment or according to an other aspect of the invention, the anti-insect barrier comprises of a series of interconnected segments, wherein the segments are arranged in series along a longitudinal direction for forming said elongated strip. An advantage of an elongated strip made by arranging a number of segments in series, for example for forming a belt for placing around a tree trunk or pillar, is, that additional segments can be readily removed or added. As a result, the belt and thus the anti-insect barrier can be made to fit to a wide range of elements with a different thickness or width. Furthermore, the individual segments can be readily detached from each other and reused to apply the anti-insect barrier to a different element.

This is in contrast to other known anti-insect barriers wherein the barriers typically consist of a single, continuous sheet or band that fully surrounds the tree trunk. As a result, the length of the band has to be appropriate for the specific dimensions of a specific target tree. Thus, the band has to be manufactured, or cut on-site, to the required dimensions. As a result, the band cannot be re-used for other trees, which may have a thickness that deviates significantly from the original target tree.

It is noted that the elongated strip comprising a series of interconnected segments may also be used in an anti-insect barrier without elastic conductors. Accordingly, invention also provides an anti-insect barrier for protecting an element, in particular a structure or a trunk or branch of a tree or shrub, wherein the barrier comprises:
a power supply,
a control system,
an elongated strip made of an electrically insulating material, wherein the strip comprises a first surface configured to be placed against an outer surface of the element, and a second surface on a side of the strip opposite to the first surface,
a first electrical conductor and a second electrical conductor, wherein said first electrical conductor and said second electrical conductor arranged on the second surface of the strip, are spaced apart and extending along a longitudinal direction of said strip, wherein a distance between the first and second electrical conductor is configured so that an insect that attempts to traverse said anti-insect barrier interconnects the first and second electrical conductor, and wherein the first electrical conductor and the second electrical conductor are each connected to the power supply via the control system,
wherein the control system is configured for temporarily applying a voltage difference between the first and the second electrical conductor, and
wherein, the anti-insect barrier comprises of a series of interconnected segments, wherein the segments are arranged in series along a longitudinal direction for forming said elongated strip.

In an embodiment, each segment of said series of segments comprises a first groove part and a second groove part spaced apart and oriented along said longitudinal direction, wherein the first groove parts and the second groove parts in the series of interconnected segments form the first and second groove, respectively, for positioning the first and second conductors therein. This embodiment provides the same advantages as above described in relation with the elongated strip with grooves.

In an embodiment, adjacent segments of said series of interconnected segments are configured to be partially inserted into each other. Preferably, at least two adjacent segments of said series of interconnected segments are slidable with respect to each other. Due to the slidable connection between the at least two adjacent segments, the length of the series of interconnected segments can adjusted to closely fit the circumference of the element, in particular to closely fit the circumference of a tree trunk or a pillar.

In an embodiment, the anti-insect barrier further comprises a container, wherein the container is configured to be reversibly mounted on one segment of said series of interconnected segments, and wherein the container is configured for holding the control system, the power supply and/or the detection system. In an alternative embodiment, at least one segment of the series of interconnected segments is formed as a container, wherein the container is configured for holding the control system, the power supply and/or the detection system.

According to a second aspect, the present invention pertains to a method for determining the presence of an insect between the at least two electrical conductors of the anti-insect barrier as described above, wherein the method comprises the steps of:
- periodically performing an electrical measurement, wherein the electrical measurement comprises a measurement of the electrical capacitance and/or the electrical resistance;
- determining if said electrical measurement is indicative of the presence of one or more of the target insect species;
- temporarily applying a voltage difference between the first and the second electrical conductor, in order to electrocute said one or more of the target insect species, if the previous step indicates the presence of said target insect species, wherein said voltage difference exceeds 5 kV, at least when substantially no current flows between the first and second electrical conductor.

In an embodiment, the method further comprises the step of recording said electrical measurements and/or a number of temporarily applied voltage differences in a memory.

In an embodiment, the step of the measurement of the electrical capacitance is performed by creating a potential difference between the two or more electrical conductors and determining the time until a reference voltage is reached.

In an embodiment, the electrical resistance measurement is performed by creating a voltage difference, and determining the resulting electrical current, wherein the electrical resistance is obtained by dividing the voltage difference by the electrical current, preferably wherein the created voltage difference is in the range of 100 - 1000 V.

In an embodiment, wherein the anti-insect barrier comprises three or more conducting wires, the method further comprises the step of measuring a time period between detecting an electrical change between a first pair of conducting wires and a subsequent detection of an electrical change between a second pair of conducting wires, wherein the first pair of conducting wires is different from the second pair of conducting wires. Preferably, wherein the electrical change between the first pair of conducting wires is substantially equal to the electrical change between the second pair of conducting wires.

The time period can be used to distinguish between different kinds of animals, in particular to identify a characteristic of a target insect species. The method according this embodiment subsequently only applies the voltage difference of 5 kV or more, when the detection system has detected the presence of at least one insect and has identified that said insect has a characteristic of the target insect species, preferably based on the electrical measurement and/or the measured time period.

According to a third aspect, the present invention pertains to a computer program comprising instructions which, when loaded onto a computer device or control device, are adapted to perform a method, or an embodiment thereof, as described above.

According to a fourth aspect, the present invention pertains to a kit for building an anti-insect barrier for protecting an element, in particular a structure or a trunk or branch of a tree or shrub, such as a tree or a pillar, wherein the kit comprises:
a power supply,
a control system,
an elongated strip made of an electrically insulating material, wherein the strip comprises a first surface configured to be placed against an outer surface of the element, and a second surface on a side of the strip opposite to the first surface,
a first elastic electrical conductor, wherein said first electrical conductor is configured to be arranged on the second surface of the strip, in a longitudinal direction thereof,
a second elastic electrical conductor, wherein said second electrical conductor is configured to be arranged on the second surface of the strip, in a longitudinal direction thereof and spaced apart from the first electrical conductor at a distance from the first conductor so that an insect that attempts to traverse said anti-insect barrier interconnects the first and second electrical conductor,
wherein the first elastic electrical conductor and the second elastic electrical conductor are each connectable to the power supply via the control system,
wherein the control system and/or the power supply is configured for temporarily applying a voltage difference between the first and the second elastic electrical conductors, and wherein said voltage difference preferably exceeds 5 kV, at least when substantially no current flows between the first and second electrical conductor.

In an embodiment, the first elastic electrical conductor and the second elastic electrical conductor are formed as a spring, preferentially a helical or coil spring.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a first example of an anti-insect barrier according to the present invention;
Figure 2 shows a second example of an anti-insect barrier according to the present invention;
Figure 3 shows a third example of an anti-insect barrier according to the present invention;
Figures 4 and 5 show perspective views of an exemplary embodiment of a segment according to the invention;
Figure 6 shows a perspective view of an alternative segment
Figures 7 and 8 show an example of a partially assembled container configured to attach to the alternative segment;
Figure 9 shows an example of an another alternative segment which is formed as a container;

### DETAILED DESCRIPTION OF THE INVENTION

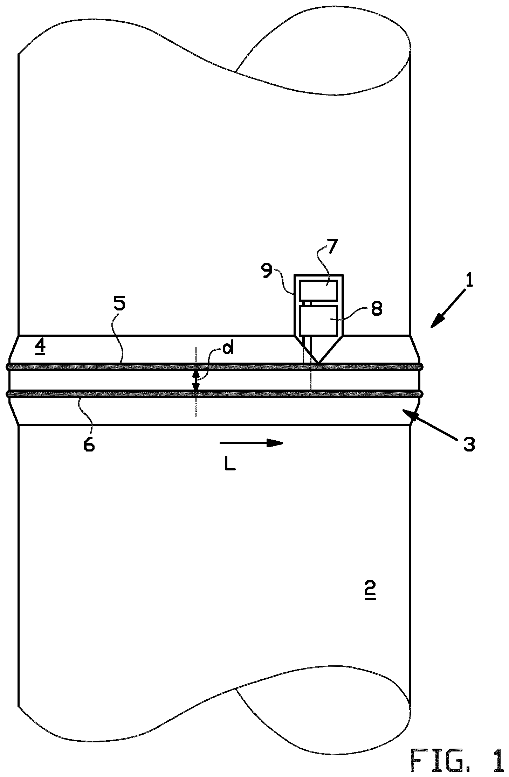

Figure 1 schematically shows a first example of an anti-insect barrier 1 for protecting an element, in particular a structure such as a pillar 2. The anti-insect barrier 1 is suitable for fighting unwanted and/or harmful insects that move over said element, in particular for fighting insects that move over said element in large groups, such as the oak processionary caterpillar, through the use of electricity. Accordingly, the anti-insect barrier 1 comprises an elongated strip 3 made of an electrically insulating material. The strip 3 comprises a first surface or inner surface (not shown) which is configured to be placed against an outer surface of the element 2, and a second surface or outer surface 4 on a side of the strip 3 opposite to the first surface. As schematically shown in figure 1, a first electrical conductor 5 and a second electrical conductor 6, are arranged on the second surface 4 of the strip 3. The first and second electrical conductors 5, 6 preferably comprise an elastic conductor, such as a conductive elastomer, which is preferably configured such that the length of the first and second electrical conductors 5, 6 in a non-stretched condition is shorter than the circumference of the element 2. Alternatively, the first and second electrical conductors 5, 6 may comprise substantially rigid conductors, which are arranged around the element, wherein both ends of the electrical conductors 5, 6 are interconnected by a coil spring (not shown) The first electrical conductor 5 and the second electrical conductor 6 are spaced apart over a distance d and extending along a longitudinal direction L of said strip 3. The distance d between the first and second electrical conductor 5, 6 is configured so that an insect that attempts to traverse said anti-insect barrier 1 interconnects the first and second electrical conductors 5, 6 and may then be electrocuted. Accordingly, the anti-insect barrier 1 comprises a power supply 7 and a control system 8. The first electrical conductor 5 and the second electrical conductor 6 are each connected to the power supply 7 via the control system 8, as schematically shown in figure 1. Preferably, the control system 8 is configured for temporarily applying a voltage difference between the first and the second electrical conductor 5, 6, and wherein said voltage difference exceeds 5 kV. Preferably wherein the voltage difference, when activated, is in a range between 15 and 20 kV. In this example, the power supply 7 and the control system 8 are arranged in a housing 9, which is connectable to or integrally formed with the strip 3. It is noted that in the schematic figure 1, the power supply 7 and the control system 8 are shown inside the housing 9. However, when in use, the housing 9 is preferably configured to completely enclose the power supply 7 and the control system 8 in order to protect them from environmental influences.

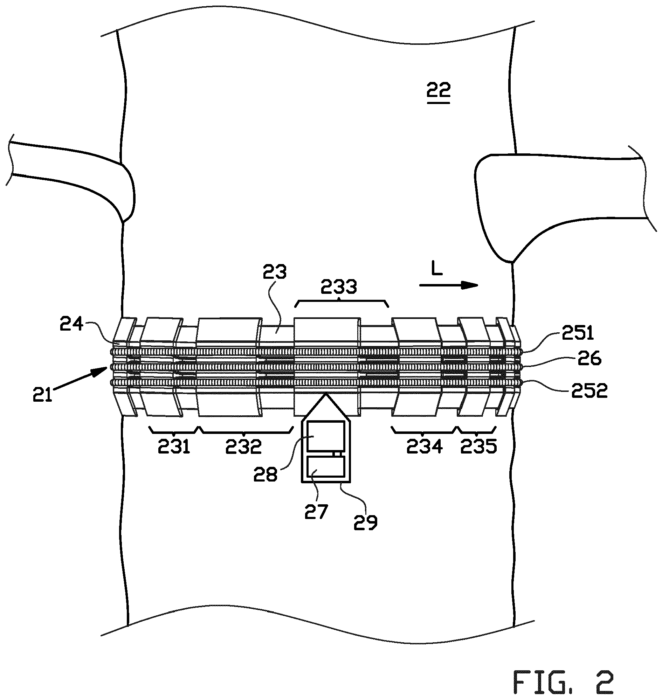

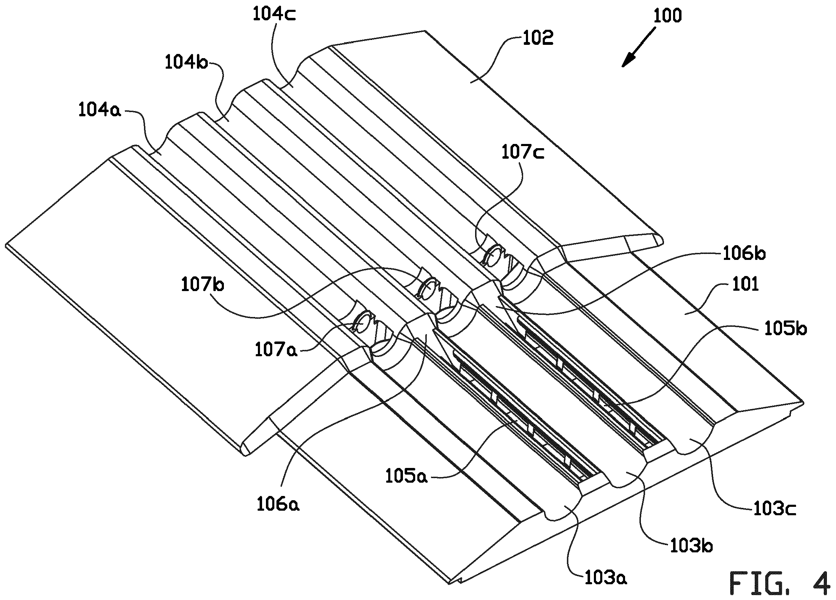

Figure 2 schematically shows a second example of an anti-insect barrier 21 for protecting an element, in particular the trunk or branch of a tree 22. The anti-insect barrier 21 is suitable for fighting unwanted and/or harmful insects that move over the trunk of said tree 22, in particular for fighting insects that move over said trunk in large groups, such as the oak processionary caterpillar, through the use of electricity. Accordingly, the anti-insect barrier 21 comprises an elongated strip 23 formed by a series of interconnected segments 231, 232, 233, 234, 235, wherein the segments are arranged in series along a longitudinal direction L. The segments 231, 232, 233, 234, 235 are made of an electrically insulating material and will be described in more detail below with reference to figures 4, 5 and 6. The strip 23 comprises a first surface or inner surface (not shown) which is configured to be placed against an outer surface of the trunk or a branch of a tree 22, and a second surface or outer surface 24 on a side of the strip 23 opposite to the first surface. As schematically shown in figure 2, the anti-insect barrier 21 according to this second example comprises a first electrical conductor 251, a second electrical conductor 252 and a third electrical conductor 26, which are all arranged on the second surface 24 of the strip 23. The first, second and third electrical conductors are arranged to extend substantially parallel in a longitudinal direction L and are spaced apart from each other. The distance between the first and third electrical conductor 251, 26 and the distance between the second and third electrical conductor 252, 26 are substantially equal and are configured so that an insect that attempts to traverse said anti-insect barrier 1 interconnects the first and third electrical conductors 251, 26 or the second and third electrical conductors 252, 26 and may then be electrocuted. Accordingly, the anti-insect barrier 21 comprises a power supply 27 and a control system 28, which are arranged in a housing 29, which is preferably closed to protect the power supply 27 and the control system 28 from environmental influences. The first and third electrical conductors 251, 252 and the second electrical conductor 26 are connected to the power supply 27 via the control system 28, as schematically shown in figure 2. The control system 28 is configured for temporarily applying a voltage difference between the first and the third electrical conductors 251, 252 on the one hand, and the second electrical conductor 26 on the other hand, and wherein said voltage difference exceeds 5 kV, preferably wherein the voltage difference, when activated, is in a range between 15 and 20 kV.

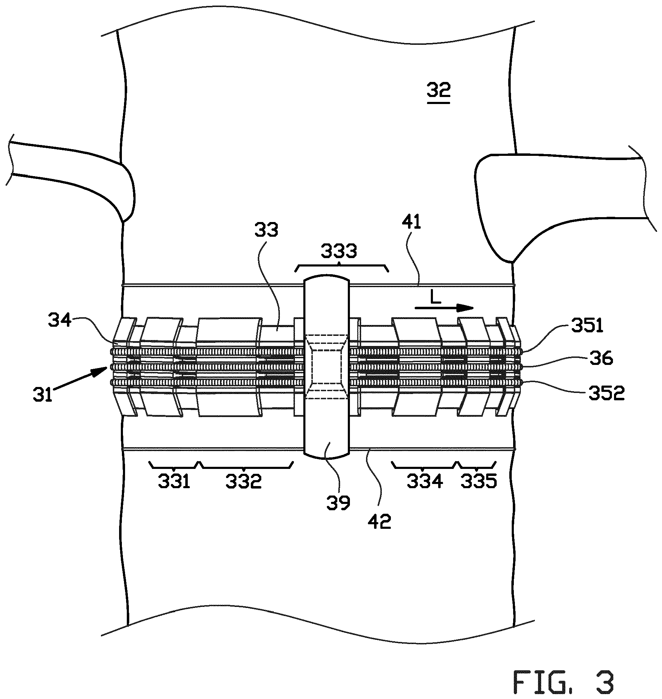

Figure 3 schematically shows a third example of an anti-insect barrier 31 for protecting a element, in particular a tree 32. Again, the anti-insect barrier 31 is suitable for fighting unwanted and/or harmful insects that move over the trunk of said tree 32, in particular for fighting insects that move over said trunk in large groups, such as the oak processionary caterpillar, through the use of electricity. Accordingly, the anti-insect barrier 31 comprises an elongated strip 33 formed by a series of interconnected segments 331, 332, 333, 334, 335, wherein the segments are arranged in series along a longitudinal direction L. The segments 331, 332, 333, 334, 335 are made of an electrically insulating material and will be described in more detail below with reference to figures 4, 5 and 6. The strip 33 comprises a first surface or inner surface (not shown) which is configured to be placed against an outer surface of the trunk or a branch of a tree 32, and a second surface or outer surface 34 on a side of the strip 33 opposite to the first surface. As schematically shown in figure 3, the anti-insect barrier 31 according to this third example comprises a first electrical conductor 351, a second electrical conductor 352 and a third electrical conductor 36, which are all arranged on the second surface 34 of the strip 33. The first, second and third electrical conductors are arranged to extend substantially parallel in a longitudinal direction L and are spaced apart from each other. The distance between the first and third electrical conductor 351, 36 and the distance between the second and third electrical conductor 352, 36 are substantially equal and are configured so that an insect that attempts to traverse said anti-insect barrier 1 interconnects the first and third electrical conductors 351, 36 or the second and third electrical conductors 352, 36 and may then be electrocuted. Accordingly, the anti-insect barrier 31 comprises a power supply and a control system, which are arranged inside a housing 39, which is preferably closed to protect the power supply and the control system from environmental influences. The first and third electrical conductors 351, 352 and the second electrical conductor 36 are connected to the power supply via the control system, and the control system is configured for temporarily applying a voltage difference between the first and the third electrical conductors 351, 352 on the one hand, and the second electrical conductor 36 on the other hand, wherein said voltage difference exceeds 5 kV, at least when there is no load connected between the first and the second electrical conductor and between the third and the second electrical conductor, wherein the voltage difference, when activated, is preferably in a range from 15 to 20 kV, Alternatively, said voltage difference may even as high as 40 kV, at least when there is no load connected between the first and the second electrical conductor and between the third and the second electrical conductor .
The example shown in figure 3 further comprises a set of sensor wires 41, 42, which are spaced apart from the strip 33. The sensor wire 41, 42 are preferentially spaced apart from strip 33 by approximately 10 cm, and preferentially arranged approximately parallel to the strip 33.

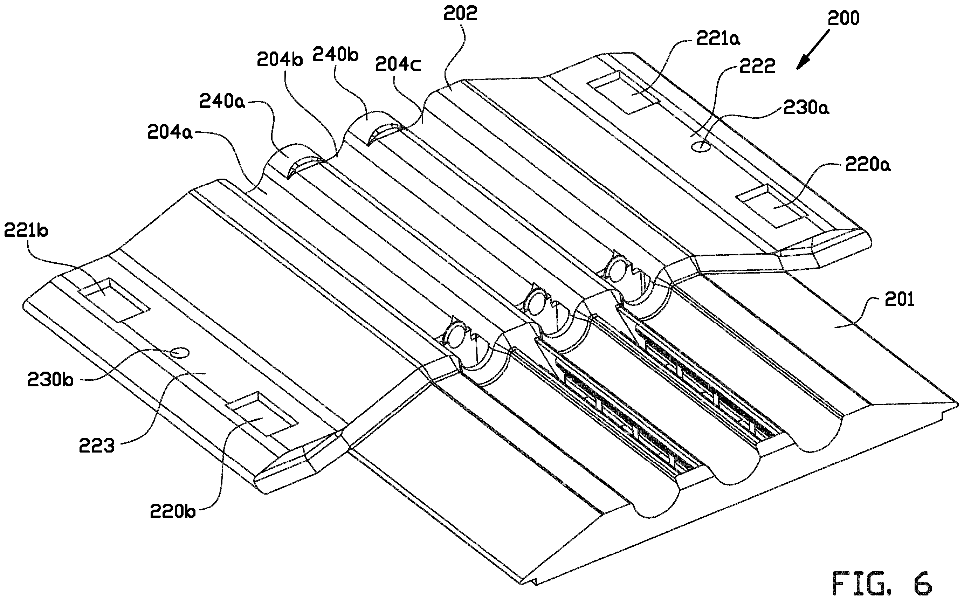

The sensor wires 41, 42 are electrically connected to the detection system, which may be directly via connectors in the housing 39 as indicated in figure 3 for example, or via additional connecting wires. These connecting wires may be connected to an electrical terminal at the first and/or second hole 230a-b in the example of figure 6, or the connecting wires may be passed through said first hole 230a and said second hole 230b, which allows to connect the sensor wires 41, 42 with a detection system inside a housing. It is noted that the detection system may be integrated into the control system, and in this situation, the sensor wires 41, 42 may be electrically connected to the control system.

The detection system may be configured for detecting changes in an electrical capacitance, for example an electrical capacitance between the sensor wires 41, 42 and electrical conducting parts of the tree. This electrical capacitance may change due to the presence of a caterpillar contacting both one of the sensor wires 41, 42 and the tree. Accordingly, a change in the capacitance can be used for detecting the presence of a caterpillar.

In addition, the detection system may also be configured to determine the time period between a detection at one of the sensor wires 41, 42 and a subsequent detection at the electrical conductors 351, 352, 36, which time period is characteristic for the time it takes the caterpillar to traverse the distance between the sensor wires and the electrical conductors. In addition or alternatively, the detection system may be configured to detect that a procession of caterpillars contact both one of the sensor wires 41, 42 and at least two adjacent ones of the electrical conductors 351, 352, 36.

It is noted that at least in the examples of figures 2 and 3, the electrical conductors are at least partially formed as a spring, in particular a helical or coil spring. The length of the electrical conductors in a non-stretched condition is preferably shorter than the circumference of the element. When the electrical conductors 251, 252, 26 351, 352, 36 are at least partially formed as springs, the springs when arranged over the elongated strip 23, 33, hold the anti-insect barrier 21, 31 snugly against the outer surface of the element. Furthermore, when the anti-insect barrier 21, 31 is arranged around the element, due to the tension of the springs, the anti-insect barrier may be held in position without the use of adhesives or mechanical fasteners, such as nails or screws. The lack of a need for adhesives or mechanical fasteners improves the reusability of the anti-insect barrier.

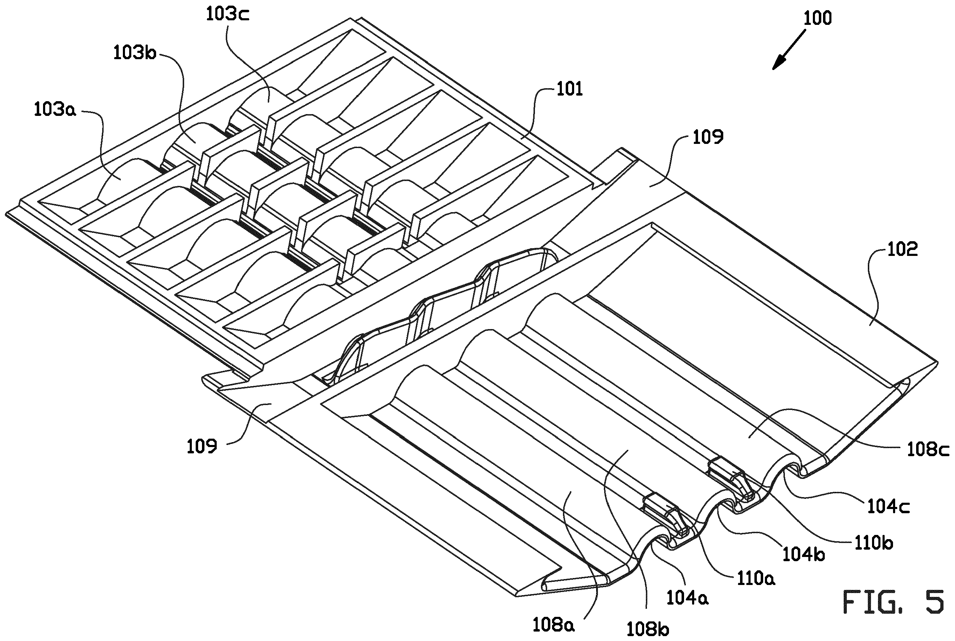

Figures 4 and 5 show an exemplary segment 100, which can be interconnected with a multitude of additional segments 100 in order to form the elongated strip 23, 33 as shown in the examples in figures 2 and 3. The segment 100 is prepared from an electrically non-conducting material, such as a plastic. The segment 100 comprises a first portion 101 and a second portion 102. The first portion 101 of the segment 100 comprises three grooves 103a-c, and the second portion 102 of the segment 100 comprises three grooves 104a-c. The grooves of the first portion and the grooves of the second portion are substantially in-line with each other, so that the backsides 108a-c of the grooves 104a-c of the second portion can be arranged in the grooves 103a-c in the first portion of a second identical segment arranged adjacent to the exemplary segment 100. The grooves 104a-c of the second portion of the exemplary segment 100 and the adjacently arranged further segment together form a substantially continuous set of three channels in which the three electrical conductors 251, 252, 26, 351, 352, 36 as shown in figures 2 and 3 can be inserted. In cross-section, the grooves 104a-c have a shape of a circle section with a diameter which is configured such that the electrical conductors 251, 252, 26, 351, 351, 36 snugly fit in the grooves 104a-c, and preferably such that the electrical conductors 251, 252, 26, 351, 351, 36 snap in the grooves 14a-c and/or are retained in the grooves 104a-c.

Optionally, the second portion 102 is shown to comprise three conductor attachment member 107a-c. The conductor attachment members 107a-c extend into the grooves 104a-c, and are configured to reach in between successive windings of a coil spring shaped electrical conductor. Accordingly, the conductor attachment members 107a-c provide an interconnection between the segment 100 and the coil spring shaped electrical conductors. Preferably, each segment 100 of a series of segments that form the elongated strip 23, 33 as shown in the examples in figures 2 and 3, is provided with said conductor attachment members 107a-c. It is noted that also in an elongated strip with only two electrical conductors, as shown in figure 1 for example, the grooves can be provided with one or more conductor attachment members of the same shape and function as shown in figure 4.

Preferably, the conductor attachment members 107a-c comprise convex surfaces which extend in a direction substantially parallel to the longitudinal direction of the grooves 104a-c. Preferably, the conductor attachment members 107a-c are substantially spherical in shape, wherein the diameter of said conductor attachment members 107a-c are configured to fit in the substantially cylindrical opening inside said coil spring shaped electrical conductors. Due to the convex surfaces or spherical shape of the conductor attachment member 107a-c, adjacent coil loops of the coil spring shaped electrical conductors must be pushed apart when placing coil attachment member 107a-c inside the coil spring shaped electrical conductors. Due to the elastic properties of the coil spring shaped electrical conductors, said adjacent coil loops at least partially return back to their original state when the convex surfaces or spherical shape of the conductor attachment member 107a-c is arranged inside the coil spring shaped electrical conductor. Accordingly, the convex surfaces or spherical shape of the conductor attachment member 107a-c are locked up inside the coil spring shaped electrical conductor, and thus a secured connection and/or a snap connection is provided between the coil spring shaped electrical conductor and the segment 100.

The spacing between the grooves 104a-c also define the spacing between the electrical conductors 251, 252, 26, 351, 352, 36, and the spacing between the grooves 104a-c is typically made large enough, so that no electrical current can flow in between the electrical conductors 251, 252, 26, 351, 352, 36 in absence of an insect that bridges the electrical conductors 251, 252, 26, 351, 352, 36.

The segment 100 further comprises a set of elongated receiving openings 105a, 105b on the front side of the first portion 101 as shown in figure 4. In addition, the segment 100 further comprises a set of connectors 110a, 110b on the backside of the second portion 102 as shown in figure 5. Individual segments can be interconnected by inserting the connectors 110a, 110b in the elongated receiving openings 105a, 105b. As a result of the elongated shape of the elongated receiving opening 105a, 105b, the connectors 110a, 110b can slide along the elongated receiving openings in order to allow the interconnected segments to slide relative to each other. This sliding action allows to adapt the length of a series of segments to the circumference of a element, in particular to the circumference of a tree trunk, while remaining flush to its outer surface.

The connectors 110a, 110b as shown in figure 5, have a flared top section which is wider than the bottom section that connects the connector 110a, 110b to the second portion 102 of the segment 100. As a result, the connectors 110a, 110b have an approximate T-shape in cross-section and the connectors 110a, 110b together with the receiving openings 105a, 105b preferentially provide a snap-type connection. The flared top section of the connectors 110a, 110b is beveled, preferably the side of the connectors 110a, 110b facing away from the first portion 101, which aids in the disassembly of a set of interconnected segments 100.

The elongated receiving openings 105a, 105b in the first portion 101 of the segment 100 further comprises a set of beveled regions 106a, 106b, at an end of the receiving openings 105a, 105b facing the second portion 102 as shown in figure 4. The beveled regions 106a, 106b are configured to aid in disassembly of a set of interconnected segments 100. When two interconnected segments 100 are pushed together, the beveled parts of the connectors 110a, 110b slide over the beveled regions 106a, 106b, and as a consequence, the connectors 110a, 110b are lifted out of their respective elongated receiving openings 105a, 105b.

As schematically shown in figure 5, the segment 100 comprises a bending section 109 which is part of the second portion 102, which bending section 109 is close to or adjacent to the first portion 101, and comprises a thinner wall than the remaining part of the second portion 102, and is also not provided with strengthening ribs. Accordingly, the bending section 109 allows the first portion 101 and the second portion 102 to flex relative to each other. In a series of interconnected segments 100, the series of segments can flex at the bending sections 109, wherein the overlapping first and second portions of adjacent segments preferably remain substantially flat in order to reduce tension on the connectors 110a, 110b. This also reduces the risk that the connectors 110a, 110b of one segment pop out of the elongated receiving opening 105a, 105b of an adjacent segment, in case the series of segments must be arranged around a element with a relatively small diameter.

It is noted that the conductor attachment members 107a-c, as shown in figure 4, are also arranged in the bending section 109. In order to provide for the conductor attachment members 107a-c in a mold for injection molding of the segment 100, the bottom of the grooves 104a-c on both sides adjacent to the conductor attachment members 107a-c are open. Due to these openings on both side adjacent to the conductor attachment members 107a-c, the segment 100 bends more easily at the bending section 109, and forces on the connectors 110a, 110b and/or on the elongated receiving openings 105a, 105b due to a bending of the segment can be reduced.

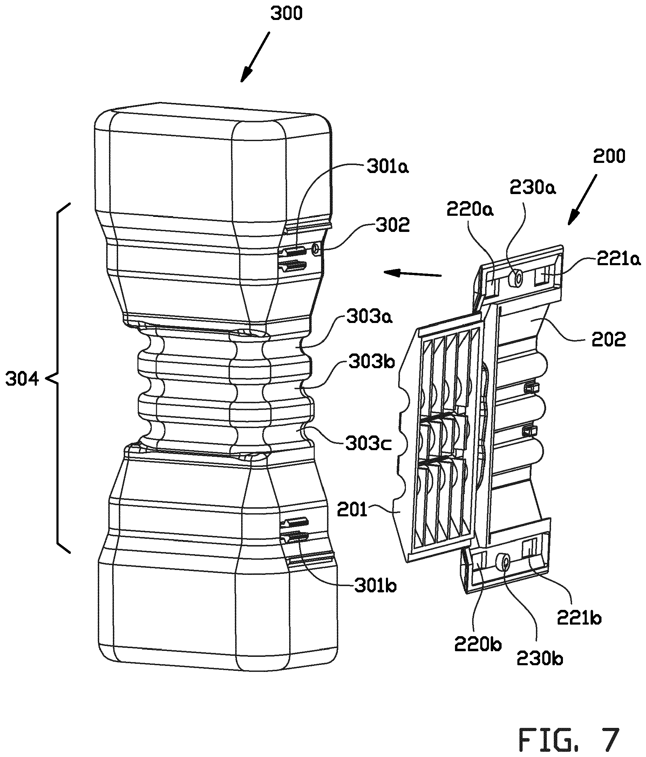

Figure 6 shows first example of an alternative segment 200 based on the segment 100 in figures 4 and 5. The alternative segment 200 is configured to be interconnected with the segment 100 to form a series of interconnected segments. In practice, the series of interconnected segments will be prepared by linking a multitude of segments 100 together with one or two alternative segments 200. The alternative segment 200 is formed so as to allow convenient attachment of additional elements to the alternative segment 200 and thus the anti-insect barrier. An example of such an additional element is a container as shown in figure 7. The alternative segment 200 comprises a first mounting region 222 and a second mounting region 223 which are each arranged at two opposing sides of the alternative segment 200, in a direction substantially perpendicular to a direction in which a first portion 201 and a second portion 202 are consecutively arranged. It is noted that the arrangements of grooves, receiving openings, and connectors are substantially the same as in the previous example as shown in figures 4 and 5 and as described above. The first mounting region 222 and the second mounting region 223 each comprises two openings 220a-b, 221a-b for mounting additional element to the alternative segment 200. Furthermore, the alternative segment 200 comprises a first hole 230a and a second hole 230b, which allows an electrical wire to be passed through for providing a connection with sensor wires 41, 42 as for example shown in the example of figure 3. In addition or alternatively, the first and/or second hole 230a-b can be used for arranging a metal nail, which metal nail is arranged to penetrate into the tree, in particular for providing an electrical contact with the Xylem and/or Phloem of the tree. Said metal nail is connected with the control system of the anti-insect barrier to provide a reference potential.

As schematically shown in the example of figure 6, the upper side of the first portion in between the grooves 204a-c are provided with a reinforcement parts 240a, 240b, at least at the position where the connectors are positioned at the side of the second portion 202 opposite to the side shown in figure 6. It is noted that in an alternative example, the segment 100 of figures 4 and 5 can also be provided with such reinforcement parts.

Figure 7 shows an example of an additional element that may be attached to the alternative segment 200, in the form of the container. In this example the container comprises two halves which are substantially mirror symmetric and which are interconnected to provide a container for holding the control system and preferably the power supply. In figure 7, only one half of the container 300 is shown, wherein the other half of the container connects with the half container 300 in order to form a complete container with an internal a cavity for holding said control system and preferably said power supply.

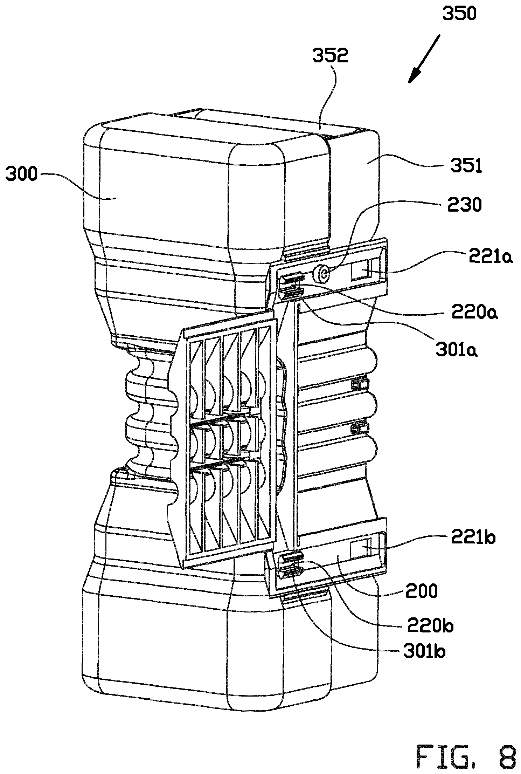

As schematically shown in figure 7, the outer wall of the container half 300 comprises snap-fits 301a, 301b which are configured to interlock with one set of the two openings 220a-b, 221a-b, wherein the openings 220a-b, 221a-b are configured to provide a snap-in area. As schematically shown in figure 8, where the first half of the container 300 attached to the alternative segment 200, the snap-fit 301a is inserted in the opening 220a and the snap-fit 301b is inserted in the opening 220b. In a similar way, a second half of the container (not shown) can be attached to the alternative segment 200, wherein the snap-fits are inserted in the openings 221a, 220b.

In addition, the center part 304 of the container is provided with a shape complementary to the second portion 202 of second surface of the additional element 200, so that the outside surface this center part 304 of the container is arranged substantially flushed against the second surface of the additional element 200. It is noted, that actually only the side of the container 300 which is intended to be arranged against the additional element 200, is preferably provided with a shape complementary to the second portion 202 of the second surface of the additional element 200. However, in the example of figure 7, all three surfaces are provided with the complementary shape.

Furthermore, as schematically shown in figure 7, the center part 304 of the container is provided with a set of three grooves 303a-c. The grooves 303a-c are configured to align with the grooves 204a-c of the additional element 200, when the container is connected to the additional element 200. Accordingly, the grooves 303a-c of the container and the grooves 204a-c of the additional element together provide a passage for electrical conductors.

The container 300 according to the example of figure 7 is provided with a hole 302, which is configured to align with the first hole 230a of the additional element 200, when the container is connected to the additional element 200. The hole 302 is configured for providing an electrical connection with the control system inside the container to sensor wires and/or a metal nail, if required.

Figure 8 shows an example wherein the container is filled with an inner framework 351 and a power supply in the form of a set of batteries 352. The inner framework may comprise one or more printed circuit boards provided with electronic components of the control system. Preferably, the one or more printed circuit boards are provided with electrical contact members for providing an electrical contact between the one or more printed circuit boards and the electrical conductors in the passage provided by the grooves 303a-c of the container and the grooves 204a-c of the additional element 200 of the anti-insect barrier. Preferably, the electrical contact member are spring-contacts (not shown).

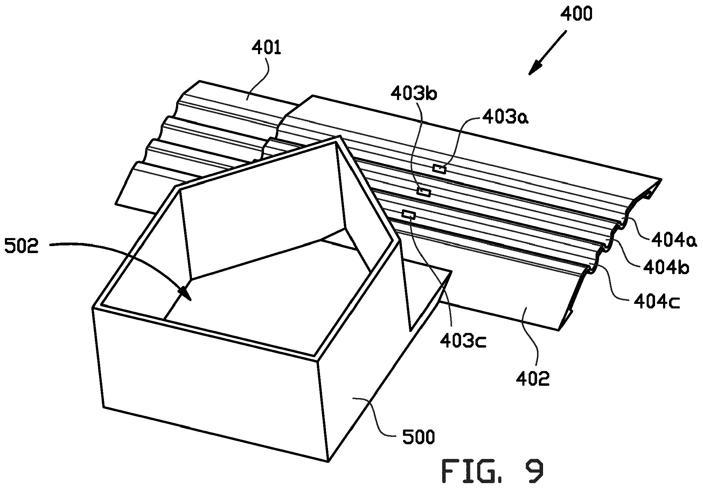

Figure 9 shows a second example of an alternative segment 400 based on the segment 100 in figures 4 and 5. The alternative segment 400 is configured to be interconnected with the segment 100 to form a series of interconnected segments. In practice, the series of interconnected segments will be prepared by linking a multitude of segments 100 together with one or two alternative segments 400. The alternative segment 400 is provided with a container 500 which is integrally formed with the first portion 401 and a second portion 402. It is noted that the arrangements of grooves, receiving openings, and connectors are substantially the same as in the previous example as shown in figures 4 and 5 and as described above.

As schematically shown in the example of figure 9, the housing 500 comprises an internal a cavity 502 for holding a control system and preferably a power supply. Preferably the housing 500 further comprises a cover member (not shown) which is configured to closing off the cavity 502, in particular for providing a substantially watertight enclosure for the control system and the power supply (if present).

The segment 400 as shown in figure 9 is preferably provided with an electrical wiring from an electrical connectors inside the housing 500 to external connectors which reach through openings 403a-c and which are configured to provide an electrical connection between a control system inside the housing 500 and the two or more conductors of the anti-insect barrier when arranged in the grooves 404a-c.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary, the invention relates to an anti-insect barrier for protecting a element. The barrier comprises a power supply, a control system and an elongated strip made of an electrically insulating material configured to be placed against an outer surface of the element. The strip comprises a first surface and a second surface, wherein the first surface is configured to be brought into contact with the outer surface of the element. The barrier further comprises a first and a second electrical conductor, wherein said first electrical conductor and said second electrical conductor are spaced apart and arranged on the second surface of the strip. The first and the second electrical conductor are each connected to the control system, wherein the control system is configured for temporarily applying a high voltage between the first and the second electrical conductor. The anti-insect barrier further comprises one or more of:
- the first and the second electrical conductor comprises at least partially elastic conductors,
- the voltage difference exceeds 5 kV, at least when substantially no current flows between the first and second electrical conductor,
- a detection system, wherein the detection system is configured to send a signal to said control system, wherein said signal is indicative of the presence of at least one insect of a target insect species on the anti-insect barrier, and wherein the control system is configured to apply the voltage difference in response to receiving said signal, and
- a series of interconnected segments, wherein the segments are arranged in series along a longitudinal direction for forming said elongated strip.

## Claims

1. An anti-insect barrier (1, 21, 31) for protecting an element (2, 22, 32), in particular a structure or a trunk or branch of a tree (22, 32) or shrub, wherein the barrier (1, 21, 31) comprises:
a power supply (7, 27),
a control system (8, 28),
an elongated strip (23, 33) made of an electrically insulating material, wherein the strip (23, 33) comprises a first surface configured to be placed against an outer surface of the element (2, 22, 32), and a second surface (4, 24, 34) on a side of the strip (23, 33) opposite to the first surface,
a first electrical conductor (5, 251, 351) and a second electrical conductor (6, 252, 352), wherein said first electrical conductor (5, 251, 351) and said second electrical conductor (6, 252, 352) arranged on the second surface (4, 24, 34) of the strip (23, 33), are spaced apart and extending along a longitudinal direction (L) of said strip (23, 33), wherein a distance (d) between the first and second electrical conductor (5, 6, 251, 252, 351, 352) is configured so that an insect that attempts to traverse said anti-insect barrier (1, 21, 31) interconnects the first and second electrical conductor (5, 6, 251, 252, 351, 352), and wherein the first electrical conductor (5, 251, 351) and the second electrical conductor (6, 252, 352) are each connected to the power supply (7, 27) via the control system (8, 28),
wherein the control system (8, 28) is configured for temporarily applying a voltage difference between the first and the second electrical conductor (5, 6, 251, 252, 351, 352), **characterized in that**
the first electrical conductor (5, 251, 351) and the second electrical conductor (6, 252, 352) at least partially comprise elastic conductors.

2. The anti-insect barrier (1, 21, 31) according to claim 1, wherein the elastic conductors are formed as a spring, preferentially a helical or coil spring.

3. The anti-insect barrier (1, 21, 31) according to claim 1 or 2, wherein said voltage difference exceeds 5 kV, at least when substantially no current flows between the first and second electrical conductor (5, 6, 251, 252, 351, 352), preferably wherein the voltage difference exceeds 10 kV, preferably exceeds 15 kV and most preferably is approximately between 15 and 20 kV.

4. The anti-insect barrier (1, 21, 31) according to claim 1, 2 or 3, wherein the anti-insect barrier (1, 21, 31) comprises a detection system, wherein the detection system is configured to send a signal to said control system (8, 28), wherein said signal is indicative of the presence of at least one insect of a target insect species on the anti-insect barrier (1, 21, 31), and wherein the control system (8, 28) is configured to apply the voltage difference in response to receiving said signal,
preferably wherein the detection system is part of the control system (8, 28),
preferably wherein the control system (8, 28) comprises a communication-unit configured for receiving and/or sending data.

5. The anti-insect barrier (1, 21, 31) according to claim 4, wherein the detection system is configured to measure changes in an electrical capacitance and/or electrical resistance between any two of: the first electrical conductor (5, 251, 351), the second electrical conductor (6, 252, 352), a third electrical conductor (26, 36), and one or more sensor wires (41, 42), if present,
preferably wherein the detection system is configured for measuring a time period between detecting a first electrical change between the first electrical conductor (5, 251, 351) and the third conductor (26, 36) or between the first electrical conductor (5, 251, 351) and a first one of the sensor wires (41, 42), and detecting a second electrical change between the second electrical conductor (6, 252, 352) and the third conductor (26, 36) or between the second electrical conductor (6, 252, 352) and a second one of the sensor wires (41, 42) which is different from the first one of the sensor wires (41, 42),
preferably wherein the first electrical change is substantially equal to the second electrical change,
preferably wherein the anti-insect barrier (1, 21, 31) further comprises said one or more sensor wires (41, 42), wherein the one or more sensor wires (41, 42) are configured to be placed against the outer surface of the element (2, 22, 32), and wherein the one or more sensor wires (41, 42) are arranged spaced apart from the elongated strip (23, 33), preferably spaced apart from the elongated strip (23, 33) by a distance of approximately 10 cm,
preferably wherein the anti-insect barrier (1, 21, 31) comprises two sensor wires (41, 42) placed at opposing sides of the elongated strip (23, 33).

6. The anti-insect barrier (1, 21, 31) according to any one of the previous claims, wherein the elongated strip (23, 33), the first electrical conductor (5, 251, 351) and the second electrical conductor (6, 252, 352) are configured to encircle the element (2, 22, 32), and/or
wherein the elongated strip (23, 33) comprises longitudinal edges at opposite longitudinal sides of the elongated strip (23, 33), wherein at each longitudinal edge the second surface (4, 24, 34) meets the first surface at an acute angle, and/or
wherein the elongated strip (23, 33) comprises at least two longitudinal grooves (103a-c, 104a-c, 204a-c, 303a-c), wherein said longitudinal grooves (103a-c, 104a-c, 204a-c, 303a-c) are spaced apart and extending along a longitudinal direction (L) of said strip (23, 33), wherein said longitudinal grooves (103a-c, 104a-c, 204a-c, 303a-c) are configured for receiving the first and second electrical conductor (5, 6, 251, 252, 351, 352), preferably wherein a depth of said longitudinal grooves (103a-c, 104a-c, 204a-c, 303a-c) is equal or less than a diameter of said first and second electrical conductors (5, 6, 251, 252, 351, 352).

7. The anti-insect barrier (1, 21, 31) according to any one of the previous claims, wherein the anti-insect barrier (1, 21, 31) comprises:
a third electrical conductor (26, 36) spaced apart from the first electrical conductor (5, 251, 351) and from the second electrical conductor (6, 252, 352), wherein the third electrical conductor (26, 36) is connected to the control system (8, 28) and arranged on the second surface (4, 24, 34) of the belt, and/or
a solar cell, wherein the solar cell is electrically connected to said power supply (7, 27).

8. The anti-insect barrier (1, 21, 31) according to any one of previous claims, wherein the anti-insect barrier (1, 21, 31) comprises of a series of interconnected segments (100, 200, 231 - 235, 331 - 335, 400), wherein the segments (100, 200, 231 - 235, 331 - 335, 400) are arranged in series along a longitudinal direction (L) for forming said elongated strip (23, 33),
preferably wherein adjacent segments of said series of interconnected segments (100, 200, 231 - 235, 331 - 335, 400) are partially inserted into each other.

9. The anti-insect barrier (1, 21, 31) according to claim 8, when dependent on claim 6, wherein each segment of said series of segments (100, 200, 231 - 235, 331 - 335, 400) comprises a first groove part and a second groove part spaced apart and oriented along said longitudinal direction (L), wherein the first groove parts and the second groove parts in the series of interconnected segments (100, 200, 231 - 235, 331 - 335, 400) form the first and second groove (103a-c, 104a-c, 204a-c, 303a-c) respectively.

10. The anti-insect barrier (1, 21, 31) according to claim 8 or 9, wherein the anti-insect barrier (1, 21, 31) further comprises a container (300), wherein the container (300) is configured to be reversibly mounted on one segment of said series of interconnected segments (100, 200, 231 - 235, 331 - 335, 400), and wherein the container (300) is configured for holding the control system (8, 28), the power supply (7, 27) and/or the detection system, or
wherein at least one segment of the series of interconnected segments (100, 200, 231 - 235, 331 - 335, 400) is formed as a container (300), wherein the container (300) is configured for holding the control system (8, 28), the power supply (7, 27) and/or the detection system.

11. A method for determining the presence of an insect between at least two electrical conductors (5, 6, 251, 252, 351, 352) of the anti-insect barrier (1, 21, 31) according to any of the claims 1 - 10, wherein the method comprises the steps of:
- periodically performing an electrical measurement, wherein the electrical measurement comprises an measurement of the electrical capacitance and/or the electrical resistance;
- determining if said electrical measurement is indicative of the presence of one or more of the target insect species;
- temporarily applying a voltage difference between the first and the second electrical conductor (6, 252, 352), in order to electrocute said one or more of the target insect species, if the previous step indicates the presence of said target insect species, preferably wherein said voltage difference exceeds 5 kV, at least when substantially no current flows between the first and second electrical conductor (5, 6, 251, 252, 351, 352).

12. The method according to claim 11, wherein the method further comprises the step of recording said electrical measurements and/or a number of temporarily applied voltage differences in a memory, and/or wherein the step of the measurement of the electrical capacitance is performed by creating a potential difference between the two or more electrical conductors (5, 6, 251, 252, 351, 352) and determining the time until a reference voltage is reached, and/or wherein the electrical resistance measurement is performed by creating a voltage difference, and determining the resulting electrical current, wherein the electrical resistance is obtained by dividing the voltage difference by the electrical current, preferably wherein the created voltage difference is in the range of 100 - 1000 V.

13. The method according to claim 11 or 12, wherein the anti-insect barrier (1, 21, 31) comprises three or more conducting wires (5, 6, 26, 36, 251, 252, 351, 352), wherein the method further comprises the step of:
measuring a time period between detecting an electrical change between a first pair of conducting wires (5, 6, 26, 36, 251, 252, 351, 352) and a subsequent detection of an electrical change between a second pair of conducting wires (5, 6, 26, 36, 251, 252, 351, 352), wherein the first pair of conducting wires (5, 6, 26, 36, 251, 252, 351, 352) is different from the second pair of conducting wires (5, 6, 26, 36, 251, 252, 351, 352),
preferably, wherein the electrical change between the first pair of conducting wires (5, 6, 26, 36, 251, 252, 351, 352) is substantially equal to the electrical changed between the second pair of conducting wires (5, 6, 26, 36, 251, 252, 351, 352) .

14. A computer program comprising instructions which, when loaded onto a computer device or control device, are adapted to perform a method according to any one of the claims 11 - 13.

15. A kit for building an anti-insect barrier (1, 21, 31) for protecting an element (2, 22, 32), in particular a structure or a trunk or branch of a tree (22, 32) or shrub, such as a tree or a pillar, wherein the kit comprises:
a power supply (7, 27),
a control system (8, 28),
an elongated strip (23, 33) made of an electrically insulating material, wherein the strip (23, 33) comprises a first surface configured to be placed against an outer surface of the element (2, 22, 32), and a second surface (4, 24, 34) on a side of the strip (23, 33) opposite to the first surface,
a first elastic electrical conductor, wherein said first electrical conductor (5, 251, 351) is configured to be arranged on the second surface (4, 24, 34) of the strip (23, 33), in a longitudinal direction (L) thereof,
a second elastic electrical conductor, wherein said second electrical conductor (6, 252, 352) is configured to be arranged on the second surface (4, 24, 34) of the strip (23, 33), in a longitudinal direction (L) thereof and spaced apart from the first electrical conductor (5, 251, 351) at a distance (d) from the first conductor so that an insect that attempts to traverse said anti-insect barrier (1, 21, 31) interconnects the first and second electrical conductor (5, 6, 251, 252, 351, 352),
wherein the first elastic electrical conductor and the second elastic electrical conductor are each connectable to the power supply (7, 27) via the control system (8, 28),
wherein the control system (8, 28) and/or the power supply (7, 27) is configured for temporarily applying a voltage difference between the first and the second electrical conductor (5, 6, 251, 252, 351, 352), and wherein said voltage difference preferably exceeds 5 kV, at least when substantially no current flows between the first and second electrical conductor (5, 6, 251, 252, 351, 352),
preferably wherein the first elastic electrical conductor and the second elastic electrical conductor are formed as a spring, more preferably a helical or coil spring.

## Patentansprüche

1. Eine Insektenschutz-Barriere (1, 21, 31) zum Schützen eines Elements (2, 22, 32), insbesondere einer Struktur oder eines Stamms oder Astes eines Baums (22, 32) oder Strauchs, wobei die Barriere (1, 21, 31) folgende Merkmale aufweist:
eine Leistungsversorgung (7, 27),
ein Steuersystem (8, 28),
einen länglichen Streifen (23, 33), der aus einem elektrisch isolierenden Material hergestellt ist, wobei der Streifen (23, 33) eine erste Oberfläche, die dazu ausgebildet ist, gegen eine Außenoberfläche des Elements (2, 22, 32) platziert zu sein, und eine zweite Oberfläche (4, 24, 34) auf einer Seite des Streifens (23, 33) gegenüber von der ersten Oberfläche aufweist,
einen ersten elektrischen Leiter (5, 251, 351) und einen zweiten elektrischen Leiter (6, 252, 352), wobei der erste elektrische Leiter (5, 251, 351) und der zweite elektrische Leiter (6, 252, 352), die auf der zweiten Oberfläche (4, 24, 34) des Streifens (23, 33) angeordnet sind, beabstandet sind und sich entlang einer Längsrichtung (L) des Streifens (23, 33) erstrecken, wobei eine Entfernung (d) zwischen dem ersten und dem zweiten elektrischen Leiter (5, 6, 251, 252, 351, 352) so ausgebildet ist, dass ein Insekt, das versucht, die Insektenschutz-Barriere (1, 21, 31) zu überqueren, den ersten und den zweiten Leiter (5, 6, 251, 252, 351, 352) miteinander verbindet, und wobei der erste elektrische Leiter (5, 251, 351) und der zweite elektrische Leiter (6, 252, 352) über das Steuersystem (8, 28) mit der Leistungsversorgung (7, 27) verbunden sind,
wobei das Steuersystem (8, 28) zum zeitweiligen Anlegen einer Spannungsdifferenz zwischen den ersten und den zweiten elektrischen Leiter (5, 6, 251, 252, 351, 352) ausgebildet ist, **dadurch gekennzeichnet, dass**
der erste elektrische Leiter (5, 251, 351) und der zweite elektrische Leiter (6, 252, 352) zumindest teilweise elastische Leiter aufweisen.

2. Die Insektenschutz-Barriere (1, 21, 31) gemäß Anspruch 1, bei der die elastischen Leiter als Feder gebildet sind, vorzugsweise als spiralförmige oder Schraubenfeder.

3. Die Insektenschutz-Barriere (1, 21, 31) gemäß Anspruch 1 oder 2, bei der die Spannungsdifferenz 5 kV überschreitet, zumindest, wenn im Wesentlichen kein Strom zwischen dem ersten und dem zweiten Leiter (5, 6, 251, 252, 351, 352) fließt, wobei vorzugsweise die Spannungsdifferenz 10 kV überschreitet, vorzugsweise 15 kV überschreitet und am bevorzugtesten etwa zwischen 15 und 20 kV beträgt.

4. Die Insektenschutz-Barriere (1, 21, 31) gemäß Anspruch 1, 2 oder 3, wobei die Insektenschutz-Barriere (1, 21, 31) ein Erfassungssystem aufweist, wobei das Erfassungssystem dazu ausgebildet ist, ein Signal an das Steuersystem (8, 28) zu senden, wobei das Signal das Vorliegen zumindest eines Insekts einer Zielinsektenspezies auf der Insektenschutz-Barriere (1, 21, 31) anzeigt, und wobei das Steuersystem (8, 28) dazu ausgebildet ist, die Spannungsdifferenz ansprechend auf ein Empfangen des Signals anzulegen,
wobei vorzugsweise das Erfassungssystem Teil des Steuersystems (8, 28) ist,
wobei vorzugsweise das Steuersystem (8, 28) eine Kommunikationseinheit aufweist, die zum Empfangen und/oder Senden von Daten ausgebildet ist.

5. Die Insektenschutz-Barriere (1, 21, 31) gemäß Anspruch 4, bei der das Erfassungssystem dazu ausgebildet ist, Änderungen an einer elektrischen Kapazität und/oder einem elektrischen Widerstand zwischen jeweils zwei von Folgenden zu messen: dem ersten elektrischen Leiter (5, 251, 351), dem zweiten elektrischen Leiter (6, 252, 352), einem dritten elektrischen Leiter (26, 36) und einem oder mehr Sensordrähten (41, 42), falls vorhanden,
wobei vorzugsweise das Erfassungssystem zum Messen eines Zeitraums zwischen einem Erfassen einer ersten elektrischen Änderung zwischen dem ersten elektrischen Leiter (5, 251, 351) und dem dritten Leiter (26, 36) oder zwischen dem ersten elektrischen Leiter (5, 251, 351) und einem ersten der Sensordrähte (41, 42) ausgebildet ist, sowie Erfassen einer zweiten elektrischen Änderung zwischen dem zweiten elektrischen Leiter (6, 252, 352) und dem dritten Leiter (26, 36) oder zwischen dem zweiten elektrischen Leiter (6, 252, 352) und einem zweiten der Sensordrähte (41, 42), der sich von dem ersten der Sensordrähte (41, 42) unterscheidet,
wobei vorzugsweise die erste elektrische Änderung im Wesentlichen gleich der zweiten elektrischen Änderung ist,
wobei vorzugsweise die Insektenschutz-Barriere (1, 21, 31) ferner den einen oder die mehr Sensordrähte (41, 42) aufweist, wobei der eine oder die mehr Sensordrähte (41, 42) dazu ausgebildet sind, gegen die Außenoberfläche des Elements (2, 22, 32) platziert zu sein, und wobei der eine oder die mehr Sensordrähte (41, 42) von dem länglichen Streifen (23, 33) beabstandet angeordnet sind, vorzugsweise von dem länglichen Streifen (23, 33) um eine Entfernung von etwa 10 cm beabstandet,
wobei vorzugsweise die Insektenschutz-Barriere (1, 21, 31) zwei Sensordrähte (41, 42) aufweist, die an gegenüberliegenden Seiten des länglichen Streifens (23, 33) platziert sind.

6. Die Insektenschutz-Barriere (1, 21, 31) gemäß einem der vorherigen Ansprüche, wobei der längliche Streifen (23, 33), der erste elektrische Leiter (5, 251, 351) und der zweite elektrische Leiter (6, 252, 352) dazu ausgebildet sind, das Element (2, 22, 32) zu umschließen, und/oder
wobei der längliche Streifen (23, 33) Längsränder an gegenüberliegenden Längsseiten des länglichen Streifens (23, 33) aufweist, wobei an jedem Längsrand die zweite Oberfläche (4, 24, 34) in einem spitzen Winkel auf die erste Oberfläche trifft, und/oder
wobei der längliche Streifen (23, 33) zumindest zwei Längsrillen (103a-c, 104a-c, 204a-c, 303a-c) aufweist, wobei die Längsrillen (103a-c, 104a-c, 204a-c, 303a-c) beabstandet sind und sich entlang einer Längsrichtung (L) des Streifens (23, 33) erstrecken, wobei die Längsrillen (103a-c, 104a-c, 204a-c, 303a-c) zum Aufnehmen des ersten und des zweiten elektrischen Leiters (5, 6, 251, 252, 351, 352) ausgebildet sind, wobei vorzugsweise eine Tiefe der Längsrillen (103a-c, 104a-c, 204a-c, 303a-c) kleiner oder gleich einem Durchmesser des ersten und des zweiten elektrischen Leiters (5, 6, 251, 252, 351, 352) ist.

7. Die Insektenschutz-Barriere (1, 21, 31) gemäß einem der vorherigen Ansprüche, wobei die Insektenschutz-Barriere (1, 21, 31) folgende Merkmale aufweist:
einen dritten elektrischen Leiter (26, 36), der von dem ersten elektrischen Leiter (5, 251, 351) und von dem zweiten elektrischen Leiter (6, 252, 352) beabstandet ist, wobei der dritte elektrische Leiter (26, 36) mit dem Steuersystem (8, 28) verbunden und auf der zweiten Oberfläche (4, 24, 34) des Bands angeordnet ist, und/oder
eine Solarzelle, wobei die Solarzelle elektrisch mit der Leistungsversorgung (7, 27) verbunden ist.

8. Die Insektenschutz-Barriere (1, 21, 31) gemäß einem der vorherigen Ansprüche, wobei die Insektenschutz-Barriere (1, 21, 31) eine Reihe miteinander verbundener Segmente (100, 200, 231-235, 331-335, 400) aufweist, wobei die Segmente (100, 200, 231-235, 331-335, 400) zum Bilden des länglichen Streifens (23, 33) in Reihe entlang einer Längsrichtung (L) angeordnet sind,
wobei vorzugsweise benachbarte Segmente der Reihe miteinander verbundener Segmente (100, 200, 231-235, 331-335, 400) teilweise ineinander geführt sind.

9. Die Insektenschutz-Barriere (1, 21, 31) gemäß Anspruch 8 bei Abhängigkeit von Anspruch 6, wobei jedes Segment der Reihe von Segmenten (100, 200, 231-235, 331-335, 400) einen ersten Rillenteil und einen zweiten Rillenteil aufweist, die beabstandet und entlang der Längsrichtung (L) orientiert sind, wobei die ersten Rillenteile und die zweiten Rillenteile in der Reihe miteinander verbundener Segmente (100, 200, 231-235, 331-335, 400) die erste bzw. die zweite Rille (103a-c, 104a-c, 204a-c, 303a-c) bilden.

10. Die Insektenschutz-Barriere (1, 21, 31) gemäß Anspruch 8 oder 9, wobei die Insektenschutz-Barriere (1, 21, 31) ferner einen Behälter (300) aufweist, wobei der Behälter (300) dazu ausgebildet ist, reversibel an einem Segment der Reihe miteinander verbundener Segmente (100, 200, 231-235, 331-335, 400) montiert zu sein, und wobei der Behälter (300) zum Halten des Steuersystems (8, 28), der Leistungsversorgung (7, 27) und/oder des Erfassungssystems ausgebildet ist, oder
wobei zumindest ein Segment der Reihe miteinander verbundener Segmente (100, 200, 231-235, 331-335, 400) als ein Behälter (300) gebildet ist, wobei der Behälter (300) zum Halten des Steuersystems (8, 28), der Leistungsversorgung (7, 27) und/oder des Erfassungssystems ausgebildet ist.

11. Ein Verfahren zum Bestimmen des Vorliegens eines Insekts zwischen zumindest zwei elektrischen Leitern (5, 6, 251, 252, 351, 352) der Insektenschutz-Barriere (1, 21, 31) gemäß einem der Ansprüche 1 bis 10, wobei das Verfahren folgende Schritte aufweist:
- periodisches Durchführen einer elektrischen Messung, wobei die elektrische Messung eine Messung der elektrischen Kapazität und/oder des elektrischen Widerstands aufweist;
- Bestimmen, ob die elektrische Messung das Vorliegen von einem oder mehr der Zielinsektenspezies anzeigt;
- vorübergehendes Anlegen einer Spannungsdifferenz zwischen den ersten und den zweiten elektrischen Leiter (6, 252, 352), um das eine oder die mehr der Zielinsektenspezies durch elektrischen Strom zu töten, wenn der vorherige Schritt das Vorliegen der Zielinsektenspezies anzeigt, wobei vorzugsweise die Spannungsdifferenz 5 kV überschreitet, zumindest, wenn im Wesentlichen kein Strom zwischen dem ersten und dem zweiten elektrischen Leiter (5, 6, 251, 252, 351, 352) fließt.

12. Das Verfahren gemäß Anspruch 11, wobei das Verfahren ferner den Schritt eines Aufzeichnens der elektrischen Messungen und/oder einer Anzahl vorübergehend angelegter Spannungsdifferenzen in einem Speicher aufweist, und/oder wobei der Schritt der Messung der elektrischen Kapazität durchgeführt wird durch Erzeugen einer Potenzialdifferenz zwischen den zwei oder mehr elektrischen Leitern (5, 6, 251, 252, 351, 352) und Bestimmen der Zeit, bis eine Referenzspannung erreicht ist, und/oder wobei die elektrische Widerstandsmessung durchgeführt wird durch Erzeugen einer Spannungsdifferenz und Bestimmen des resultierenden elektrischen Stroms, wobei der elektrische Widerstand erhalten wird durch Teilen der Spannungsdifferenz durch den elektrischen Strom, wobei vorzugsweise die erzeugte Spannungsdifferenz in dem Bereich von 100-1000 V liegt.

13. Das Verfahren gemäß Anspruch 11 oder 12, bei dem die Insektenschutz-Barriere (1, 21, 31) drei oder mehr leitende Drähte (5, 6, 26, 36, 251, 252, 351, 352) aufweist, wobei das Verfahren ferner folgenden Schritt aufweist:
Messen eines Zeitraums zwischen einem Erfassen einer elektrischen Änderung zwischen einem ersten Paar leitender Drähte (5, 6, 26, 36, 251, 252, 351, 352) und einer nachfolgenden Erfassung einer elektrischen Änderung zwischen einem zweiten Paar leitender Drähte (5, 6, 26, 36, 251, 252, 351, 352), wobei sich das erste Paar leitender Drähte (5, 6, 26, 36, 251, 252, 351, 352) von dem zweiten Paar leitender Drähte (5, 6, 26, 36, 251, 252, 351, 352) unterscheidet,
wobei vorzugsweise die elektrische Änderung zwischen dem ersten Paar leitender Drähte (5, 6, 26, 36, 251, 252, 351, 352) im Wesentlichen gleich der elektrischen Änderung zwischen dem zweiten Paar leitender Drähte (5, 6, 26, 36, 251, 252, 351, 352) ist.

14. Ein Computerprogramm mit Befehlen, die, wenn sie auf eine Computervorrichtung oder Steuervorrichtung geladen sind, dazu angepasst sind, ein Verfahren gemäß einem der Ansprüche 11 bis 13 durchzuführen.

15. Ein Satz zum Bauen einer Insektenschutz-Barriere (1, 21, 31) zum Schützen eines Elements (2, 22, 32), insbesondere einer Struktur oder eines Stammes oder Zweigs eines Baums (22, 32) oder Strauchs, wie z. B. eines Baums oder einer Säule, wobei der Satz folgende Merkmale aufweist:
eine Leistungsversorgung (7, 27),
ein Steuersystem (8, 28),
einen länglichen Streifen (23, 33), der aus einem elektrisch isolierenden Material hergestellt ist, wobei der Streifen (23, 33) eine erste Oberfläche, die dazu ausgebildet ist, gegen eine Außenoberfläche des Elements (2, 22, 32) platziert zu sein, und eine zweite Oberfläche (4, 24, 34) auf einer Seite des Streifens (23, 33) gegenüber von der ersten Oberfläche aufweist,
einen ersten elastischen elektrischen Leiter, wobei der erste elektrische Leiter (5, 251, 351) dazu ausgebildet ist, auf der zweiten Oberfläche (4, 24, 34) des Streifens (23, 33) in einer Längsrichtung (L) desselben angeordnet zu sein,
einen zweiten elastischen elektrischen Leiter, wobei der zweite elektrische Leiter (6, 252, 352) dazu ausgebildet ist, auf der zweiten Oberfläche (4, 24, 34) des Streifens (23, 33) in einer Längsrichtung (L) desselben angeordnet und von dem ersten elektrischen Leiter (5, 251, 351) in einer Entfernung (d) von dem ersten Leiter beabstandet zu sein, so dass ein Insekt, das versucht, die Insektenschutz-Barriere (1, 21, 31) zu überqueren, den ersten und den zweiten elektrischen Leiter (5, 6, 251, 252, 351, 352) miteinander verbindet,
wobei der erste elastische elektrische Leiter und der zweite elastische elektrische Leiter jeweils über das Steuersystem (8, 28) mit der Leistungsversorgung (7, 27) verbindbar sind,
wobei das Steuersystem (8, 28) und/oder die Leistungsversorgung (7, 27) zum vorübergehenden Anlegen einer Spannungsdifferenz zwischen den ersten und den zweiten elektrischen Leiter (5, 6, 251, 252, 351, 352) ausgebildet sind, und wobei die Spannungsdifferenz vorzugsweise 5 kV überschreitet, zumindest, wenn im Wesentlichen kein Strom zwischen dem ersten und dem zweiten Leiter (5, 6, 251, 252, 351, 352) fließt,
wobei vorzugsweise der erste elastische elektrische Leiter und der zweite elastische elektrische Leiter als eine Feder gebildet sind, noch bevorzugter eine spiralförmige oder Schraubenfeder.

## Revendications

1. Barrière anti-insectes (1, 21, 31) pour protéger un élément (2, 22, 32), en particulier une structure ou un tronc ou une branche d'un arbre (22, 32) ou d'un arbuste, dans laquelle la barrière (1, 21, 31) comprend :
une alimentation électrique (7, 27),
un système de commande (8, 28),
une bande (23, 33) allongée réalisée en un matériau électriquement isolant, dans laquelle la bande (23, 33) comprend une première surface configurée pour être placée contre une surface extérieure de l'élément (2, 22, 32), et une deuxième surface (4, 24, 34) sur un côté de la bande (23, 33) opposé à la première surface,
un premier conducteur électrique (5, 251, 351) et un deuxième conducteur électrique (6, 252, 352), dans laquelle ledit premier conducteur électrique (5, 251, 351) et ledit deuxième conducteur électrique (6, 252, 352), agencés sur la deuxième surface (4, 24, 34) de la bande (23, 33), sont espacés et s'étendent le long d'une direction longitudinale (L) de ladite bande (23, 33), dans laquelle une distance (d) entre les premier et deuxième conducteurs électriques (5, 6, 251, 252, 351, 352) est configurée de telle sorte qu'un insecte qui tente de traverser ladite barrière anti-insectes (1, 21, 31) interconnecte les premier et deuxième conducteurs électriques (5, 6, 251, 252, 351, 352), et dans laquelle le premier conducteur électrique (5, 251, 351) et le deuxième conducteur électrique (6, 252, 352) sont chacun connectés à l'alimentation électrique (7, 27) via le système de commande (8, 28),
dans laquelle le système de commande (8, 28) est configuré pour appliquer temporairement une différence de tension entre les premier et deuxième conducteurs électriques (5, 6, 251, 252, 351, 352), **caractérisé en ce que**
le premier conducteur électrique (5, 251, 351) et le deuxième conducteur électrique (6, 252, 352) comprennent au moins partiellement des conducteurs élastiques.

2. Barrière anti-insectes (1, 21, 31) selon la revendication 1, dans laquelle les conducteurs élastiques sont formés comme un ressort, de préférence un ressort hélicoïdal ou à boudin.

3. Barrière anti-insectes (1, 21, 31) selon la revendication 1 ou 2, dans laquelle ladite différence de tension dépasse 5 kV, au moins lorsqu'il n'y a pratiquement pas de courant qui circule entre les premier et deuxième conducteurs électriques (5, 6, 251, 252, 351, 352), de préférence dans laquelle la différence de tension dépasse 10 kV, de préférence dépasse 15 kV et de manière préférée entre toutes est approximativement entre 15 et 20 kV.

4. Barrière anti-insectes (1, 21, 31) selon la revendication 1, 2 ou 3, dans laquelle la barrière anti-insectes (1, 21, 31) comprend un système de détection, dans laquelle le système de détection est configuré pour envoyer un signal audit système de commande (8, 28), dans laquelle ledit signal indique la présence d'au moins un insecte d'une espèce d'insectes cible sur la barrière anti-insectes (1, 21, 31), et dans laquelle le système de commande (8, 28) est configuré pour appliquer la différence de tension en réponse à la réception dudit signal,
de préférence dans laquelle le système de détection fait partie du système de commande (8, 28),
de préférence dans laquelle le système de commande (8, 28) comprend une unité de communication configurée pour recevoir et/ou envoyer des données.

5. Barrière anti-insectes (1, 21, 31) selon la revendication 4, dans laquelle le système de détection est configuré pour mesurer des changements d'une capacité électrique et/ou d'une résistance électrique entre deux des éléments suivants : le premier conducteur électrique (5, 251, 351), le deuxième conducteur électrique (6, 252, 352), un troisième conducteur électrique (26, 36), et un ou plusieurs fils capteurs (41, 42), s'ils sont présents,
de préférence dans laquelle le système de détection est configuré pour mesurer une période de temps entre la détection d'un premier changement électrique entre le premier conducteur électrique (5, 251, 351) et le troisième conducteur électrique (26, 36), ou entre le premier conducteur électrique (5, 251, 351) et un premier fil des fils capteurs (41, 42), et la détection d'un deuxième changement électrique entre le deuxième conducteur électrique (6, 252, 352) et le troisième conducteur électrique (26, 36), ou entre le deuxième conducteur électrique (6, 252, 352) et un deuxième fil des fils capteurs (41, 42) qui est différent du premier fil des fils capteurs (41, 42),
de préférence dans laquelle le premier changement électrique est sensiblement égal au deuxième changement électrique,
de préférence dans laquelle la barrière anti-insectes (1, 21, 31) comprend en outre lesdits un ou plusieurs fils capteurs (41, 42), dans laquelle les un ou plusieurs fils capteurs (41, 42) sont configurés pour être placés contre la surface extérieure de l'élément (2, 22, 32), et dans laquelle les un ou plusieurs fils capteurs (41, 42) sont agencés de manière à être espacés de la bande (23, 33) allongée, de préférence espacés de la bande (23, 33) allongée d'une distance d'environ 10 cm,
de préférence dans laquelle la barrière anti-insectes (1, 21, 31) comprend deux fils capteurs (41, 42) placés sur des côtés opposés de la bande (23, 33) allongée.

6. Barrière anti-insectes (1, 21, 31) selon l'une quelconque des revendications précédentes, dans laquelle la bande (23, 33) allongée, le premier conducteur électrique (5, 251, 351) et le deuxième conducteur électrique (6, 252, 352) sont configurés pour encercler l'élément (2, 22, 32), et/ou
dans laquelle la bande (23, 33) allongée comprend des bords longitudinaux sur des côtés opposés de la bande (23, 33) allongée, dans laquelle à chaque bord longitudinal, la deuxième surface (4, 24, 34) rencontre la première surface à un angle aigu, et/ou
dans laquelle la bande (23, 33) allongée comprend au moins deux rainures (103a-c, 104a-c, 204a-c, 303a-c) longitudinales, dans laquelle lesdites rainures (103a-c, 104a-c, 204a-c, 303a-c) longitudinales sont espacées et s'étendant le long d'une direction longitudinale (L) de ladite bande (23, 33), dans laquelle lesdites rainures (103a-c, 104a-c, 204a-c, 303a-c) longitudinales sont configurées pour recevoir les premier et deuxième conducteurs électriques (5, 6, 251, 252, 351, 352), de préférence dans laquelle une profondeur desdites rainures (103a-c, 104a-c, 204a-c, 303a-c) longitudinales est égale ou inférieure au diamètre desdits premier et deuxième conducteurs électriques (5, 6, 251, 252, 351, 352) .

7. Barrière anti-insectes (1, 21, 31) selon l'une quelconque des revendications précédentes, dans laquelle la barrière anti-insectes (1, 21, 31) comprend :
un troisième conducteur électrique (26, 36) espacé du premier conducteur électrique (5, 251, 351) et du deuxième conducteur électrique (6, 252, 352), dans laquelle le troisième conducteur électrique (26, 36) est connecté au système de commande (8, 28) et agencé sur la deuxième surface (4, 24, 34) de la courroie, et/ou
une cellule solaire, dans laquelle la cellule solaire est connectée électriquement à ladite alimentation électrique (7, 27).

8. Barrière anti-insectes (1, 21, 31) selon l'une quelconque des revendications précédentes, dans laquelle la barrière anti-insectes (1, 21, 31) comprend l'un d'une série de segments (100, 200, 231 - 235, 331 - 335, 400) interconnectés, dans laquelle les segments (100, 200, 231 - 235, 331 - 335, 400) sont agencés en série le long d'une direction longitudinale (L) pour former ladite bande (23, 33) allongée,
de préférence dans laquelle des segments adjacents de ladite série de segments (100, 200, 231 - 235, 331 - 335, 400) interconnectés sont partiellement insérés l'un dans l'autre.

9. Barrière anti-insectes (1, 21, 31) selon la revendication 8 lorsqu'elle dépend de la revendication 6, dans laquelle chaque segment de ladite série de segments (100, 200, 231 - 235, 331 - 335, 400) comprend une première partie de rainure et une deuxième partie de rainure, espacés l'une de l'autre et orientées le long de ladite direction longitudinale (L) , dans laquelle la première partie de rainures et la deuxième partie de rainures dans la série de segments (100, 200, 231 - 235, 331 - 335, 400) interconnectés forment respectivement les première et deuxième rainures (103a-c, 104a-c, 204a-c, 303a-c).

10. Barrière anti-insectes (1, 21, 31) selon la revendication 8 ou 9, dans laquelle la barrière anti-insectes (1, 21, 31) comprend en outre un conteneur (300), dans laquelle le conteneur (300) est configuré pour être monté de manière réversible sur un segment de ladite série de segments (100, 200, 231 - 235, 331 - 335, 400) interconnectés, et dans laquelle le conteneur (300) est configuré pour contenir le système de commande (8, 28), l'alimentation électrique (7, 27) et/ou le système de détection, ou
dans laquelle au moins un segment de la série de segments (100, 200, 231 - 235, 331 - 335, 400) interconnectés est formé comme un conteneur (300), dans laquelle le conteneur (300) est configuré pour contenir le système de commande (8, 28), l'alimentation électrique (7, 27) et/ou le système de détection.

11. Procédé pour déterminer la présence d'un insecte entre au moins deux conducteurs électriques (5, 6, 251, 252, 351, 352) de la barrière anti-insectes (1, 21, 31) selon l'une quelconque des revendications 1 à 10, dans lequel le procédé comprend les étapes suivantes :
- effectuer périodiquement une mesure électrique, dans lequel la mesure électrique comprend une mesure de la capacité électrique et/ou de la résistance électrique ;
- déterminer si ladite mesure électrique indique la présence d'une ou plusieurs espèces d'insectes cibles ;
- appliquer temporairement une différence de tension entre les premier et deuxième conducteurs électriques (6, 252, 352), afin d'électrocuter lesdites une ou plusieurs espèces d'insectes cibles, si l'étape précédente indique la présence desdites espèces d'insectes cibles, de préférence dans lequel ladite différence de tension dépasse 5 kV, au moins lorsqu'il n'y a pratiquement pas de courant qui circule entre les premier et deuxième conducteurs électriques (5, 6, 251, 252, 351, 352).

12. Procédé selon la revendication 11, dans lequel le procédé comprend en outre une étape pour enregistrer dans une mémoire lesdites mesures électriques et/ou un nombre de différences de tension appliquées temporairement, et/ou dans lequel l'étape de la mesure de la capacité électrique est effectuée en créant une différence de potentiel entre les deux conducteurs électriques (5, 6, 251, 252, 351, 352) ou plus, et en déterminant le temps écoulé jusqu'à ce qu'une tension de référence soit atteinte, et/ou dans lequel la mesure de la résistance électrique est effectuée en créant une différence de tension, et en déterminant le courant électrique résultant, dans lequel la résistance électrique est obtenue en divisant la différence de tension par le courant électrique, de préférence dans lequel la différence de tension créée varie dans la plage de 100 à 1000 V.

13. Procédé selon la revendication 11 ou 12, dans lequel la barrière anti-insectes (1, 21, 31) comprend trois fils conducteurs (5, 6, 26, 36, 251, 252, 351, 352) ou plus, dans lequel le procédé comprend en outre l'étape :
pour mesurer une période de temps entre la détection d'un changement électrique entre une première paire de fils conducteurs (5, 6, 26, 36, 251, 252, 351, 352) et une détection ultérieure d'un changement électrique entre une deuxième paire de fils conducteurs (5, 6, 26, 36, 251, 252, 351, 352), dans lequel la première paire de fils conducteurs (5, 6, 26, 36, 251, 252, 351, 352) est différente de la deuxième paire de fils conducteurs (5, 6, 26, 36, 251, 252, 351, 352),
de préférence, dans lequel le changement électrique entre la première paire de fils conducteurs (5, 6, 26, 36, 251, 252, 351, 352) est sensiblement égal au changement électrique entre la deuxième paire de fils conducteurs (5, 6, 26, 36, 251, 252, 351, 352).

14. Programme informatique comprenant des instructions qui, lorsqu'elles sont chargées un dispositif informatique ou un dispositif de commande, sont adaptées pour effectuer un procédé selon l'une quelconque des revendications 11 à 13.

15. Kit pour construire une barrière anti-insectes (1, 21, 31) pour protéger un élément (2, 22, 32), en particulier une structure ou un tronc ou une branche d'un arbre (22, 32) ou d'un arbuste, tel qu'un arbre ou un pilier, dans lequel le kit comprend :
une alimentation électrique (7, 27),
un système de commande (8, 28),
une bande (23, 33) allongée réalisée en un matériau électriquement isolant, dans lequel la bande (23, 33) comprend une première surface configurée pour être placée contre une surface extérieure de l'élément (2, 22, 32), et une deuxième surface (4, 24, 34) sur un côté de la bande (23, 33) opposé à la première surface,
une premier conducteur électrique élastique, dans lequel ledit premier conducteur électrique (5, 251, 351) est configuré pour être agencé sur la deuxième surface (4, 24, 34) de la bande (23, 33), dans sa direction longitudinale (L),
une deuxième conducteur électrique élastique, dans lequel ledit deuxième conducteur électrique (6, 252, 352) est configuré pour être agencé sur la deuxième surface (4, 24, 34) de la bande (23, 33), dans sa direction longitudinale (L) et espacé du premier conducteur électrique (5, 251, 351) à une distance (d) du premier conducteur, de sorte qu'un insecte qui tente de traverser ladite barrière anti-insectes (1, 21, 31) interconnecte les premier et deuxième conducteurs électriques (5, 6, 251, 252, 351, 352),
dans lequel le premier conducteur électrique élastique et le deuxième conducteur électrique élastique sont chacun connectables à l'alimentation électrique (7, 27) via le système de commande (8, 28),
dans lequel le système de commande (8, 28) et/ou l'alimentation électrique (7, 27) est configuré pour appliquer temporairement une différence de tension entre le premier et le deuxième conducteur électrique (5, 6, 251, 252, 351, 352), et dans lequel ladite différence de tension de préférence dépasse 5 kV, au moins lorsqu'il n'y a pratiquement pas de courant qui circule entre les premier et deuxième conducteurs électriques (5, 6, 251, 252, 351, 352),
de préférence dans lequel le premier conducteur électrique élastique et le deuxième conducteur électrique élastique sont formés comme un ressort, de manière davantage préférée un ressort hélicoïdal ou à boudin.
